# EUROPEAN PATENT SPECIFICATION

(11) **EP 3 020 759 B1**
(45) Date of publication and mention of the grant of the patent: **21.11.2018**
(21) Application number: 14822730.9
(22) Date of filing: 08.07.2014
(51) Int. Cl.: C08L 23/10, C08K 3/00, C08K 3/04, C08K 3/34, C08K 5/20, C08L 23/16, C08L 23/26, C08L 53/00, C08L 23/12, C08L 23/14

(54) **PROPYLENE-BASED RESIN COMPOSITION AND APPLICATION FOR SAME**
HARZZUSAMMENSETZUNG AUF PROPYLENBASIS UND ANWENDUNG DAVON
COMPOSITION DE RÉSINE À BASE DE PROPYLÈNE ET SON APPLICATION

(30) Priority: 08.07.2013 JP 2013142699
(43) Date of publication of application: 18.05.2016
(73) Proprietor: Prime Polymer Co., Ltd., Tokyo 105-7117 (JP)
(72) Inventor: SHINOZUKA, Takuya, Sodegaura-shi Chiba 299-0265 (JP); HIRANO, Ichinosuke, Sodegaura-shi Chiba 299-0265 (JP); KUSUMOTO, Tatsuya, Sodegaura-shi Chiba 299-0265 (JP)
(74) Representative: Hoffmann Eitle
(86) International application number: PCT/JP2014/068110
(87) International publication number: WO 2015/005303

(56) References cited:
- JP-A- 2010 537 039
- JP-A- 2012 107 078
- JP-A- 2012 241 055
- US-A1- 2009 181 246

## Description

### TECHNICAL FIELD

The present invention relates to propylene resin compositions that can give shaped articles excellent not only in mechanical characteristics but also in scratch resistance, and to uses of the compositions.

### BACKGROUND ART

Polypropylene articles for use in the field of automobile parts, in particular interior materials, are usually frequently subjected to post treatments such as coating and skin lamination for the purposes of obtaining scratch resistance and low gloss (to give the articles an upscale image and to reduce reflections in window glass for safety reasons) and concealing appearance defects such as flow marks. The inclusion of such post treatments makes it impossible to sufficiently benefit from the economic efficiency of the materials in the production.

To enhance economic efficiency, Patent Literature 1 describes a propylene resin composition having excellent mechanical properties, high scratch resistance, low gloss and good appearance with less noticeable flow marks. However, the improvements in the above effects are not sufficient. Further, the literature does not describe the effect and the mechanism of the action of carbon blacks and inorganic or organic pigments in improving scratch resistance.

### CITATION LIST

### PATENT LITERATURE

Patent Literature 1: JP-A-2009-79117

### SUMMARY OF INVENTION

### TECHNICAL PROBLEM

An object of the invention is to provide a propylene resin composition that can give shaped articles excellent in mechanical properties and scratch resistance, and to provide a shaped article with excellent mechanical properties and scratch resistance that includes the propylene resin composition.

### SOLUTION TO PROBLEM

The present inventors carried out extensive studies in order to achieve the above object. As a result, the present inventors have found that a propylene resin composition described below is suited for the production of shaped articles, in particular automobile interior parts, having excellent mechanical characteristics and scratch resistance. The present invention has been completed based on the finding.

A propylene resin composition of the invention includes:
100 parts by weight of a resin composition (G) including:
50 to 75 wt% of a propylene polymer (A) having a melt flow rate (ISO 1133, 230°C, 2.16 kg load) of 20 to 300 g/10 min,
5 to 15 wt% of an ethylene ·α-olefin·diene copolymer (B-1) having a melt flow rate (ISO 1133, 230°C, 2.16 kg load) of less than 0.4 g/10 min,
5 to 15 wt% of an ethylene·α-olefin copolymer (B-2) having a melt flow rate (ISO 1133, 230°C, 2.16 kg load) of 0.5 g/10 min to less than 10 g/10 min, and
15 to 30 wt% of an inorganic filler (C) (wherein the total amount of the components (A), (B-1), (B-2) and (C) is 100 wt%) ;
0.1 to 5.0 parts by weight of a modified polypropylene (D) ;
0.1 to 1.0 part by weight of a surface modifier (E); and
1.0 to 6.0 parts by weight of a pigment (F) wherein the surface modifier (E) is one or more selected from the group consisting of fatty acid amides and monoglycerides, and wherein the pigment (F) is a mixture including a carbon black (F-1) and an inorganic or organic pigment (F-2).

In the propylene resin composition of the invention, the pigment (F) is preferably a mixture including 0.5 parts by weight to 3.0 parts by weight of a carbon black (F-1) and 0.5 parts by weight to 3.0 parts by weight of an inorganic or organic pigment (F-2). The ratio of the amount of the carbon black (F-1) to the amount of the inorganic or organic pigment (F-2) ((F-1)/(F-2)) is preferably 1.0 to 3.0.

In the propylene resin composition of the invention, the carbon black (F-1) preferably has an average primary particle diameter of 10 nm to less than 45 nm and a surface area of 40 m²/g to 550 m²/g.

In the propylene resin composition of the invention, the propylene polymer (A) is preferably a propylene·ethylene block copolymer. It is more preferable that the propylene·ethylene block copolymer have a content of 23°C n-decane soluble fraction of 5 to 15 wt%.

In the propylene resin composition of the invention, the intrinsic viscosity [η] of a 23°C n-decane soluble fraction of the component (B-1) is preferably 2.0 to 2.4 dl/g and the intrinsic viscosity [η] of a 23°C n-decane soluble fraction of the component (B-2) is preferably 1.0 to 2.0 dl/g. The total amount of the component (B-1) and the component (B-2) is preferably 10 to 30 wt% relative to 100 wt% of the resin composition (G). The proportion of the component (B-1) in the total amount of the component (B-1) and the component (B-2) is preferably 25 to 75 wt%.

In the propylene resin composition of the invention, the inorganic filler (C) is preferably talc having an average particle diameter of 1 to 15 µm.

In the propylene resin composition of the invention, the modified polypropylene (D) is preferably a fatty acid anhydride-modified polypropylene.

In the propylene resin composition of the invention, the surface modifier (E) is preferably a fatty acid amide.

In the propylene resin composition of the invention, the pigment (F) is preferably one or more selected from the group consisting of titanium oxides, Ti-Cr-Sb composite oxide pigments and copper phthalocyanine pigments.

A shaped article, an automobile interior or exterior part, and a home appliance of the invention include the aforementioned propylene resin composition of the invention.

### ADVANTAGEOUS EFFECTS OF INVENTION

The propylene resin compositions according to the present invention are suited for injection molding, can give shaped articles excellent in mechanical characteristics and scratch resistance, and are suitably used in applications where sophisticated designs are required such as automobile interior parts.

### DESCRIPTION OF EMBODIMENTS

The present invention will be described in detail hereinbelow.

A propylene resin composition of the invention includes a resin composition (G) including the following components (A), (B-1), (B-2) and (C), a modified polypropylene (D), a surface modifier (E) and a pigment (F) wherein the surface modifier (E) is one or more selected from the group consisting of fatty acid amides and monoglycerides, and wherein the pigment (F) is a mixture including a carbon black (F-1) and an inorganic or organic pigment (F-2).

Hereinbelow, the constituent components and optional components will be described in detail.

### 〈Propylene polymers (A)〉

The propylene polymer (A) used in the invention has a melt flow rate of 20 to 300 g/10 min, and preferably 50 to 250 g/10 min.

The propylene polymer (A) may be a propylene homopolymer or a copolymer of propylene with a comonomer. In particular, a propylene·ethylene block copolymer is preferable, and the content of 23°C n-decane soluble fraction of the copolymer is preferably 5 to 15 wt%, and more preferably 7 to 13 wt%. The ethylene content in the 23°C n-decane soluble fraction is preferably 25 to 50 mol%, and more preferably 30 to 45 mol%.

The propylene polymer (A) may be produced using a known titanium catalyst. Preferred examples of the titanium catalysts include solid polymerization catalysts based on a solid titanium catalyst component containing titanium, magnesium and halogen atoms, and an aluminum compound.

A propylene·ethylene block copolymer as the propylene polymer (propylene block copolymer) (A) used in the invention may be produced by, for example, multistage polymerization in the presence of a catalyst capable of giving highly stereoregular polypropylenes in accordance with a method described in JP-A-H11-107975 or JP-2004-262993. Specifically, such a propylene block copolymer may be produced by two-stage or multistage polymerization in the presence of a highly stereoregular polypropylene production catalyst formed of (i) a solid titanium catalyst component including magnesium, titanium, a halogen and an electron donor, (ii) an organometallic compound catalyst component and (iii) a donor component, the multistage polymerization including a first stage in which propylene is polymerized in the substantial presence or absence of hydrogen to produce propylene homopolymer segments in a ratio of 75 to 95 wt% to the whole of the final propylene block copolymer, and a stage in which ethylene and propylene are copolymerized to produce ethylene ·propylene random copolymer segments in a ratio of 5 to 25 wt% to the whole of the final propylene block copolymer. The MFR and the intrinsic viscosity [η] of propylene block copolymers (A-1) and (A-2) described later may be controlled appropriately by adjusting conditions such as polymerization conditions. The controlling methods are not particularly limited, but the use of hydrogen as a molecular weight modifier is preferable.

The polymerization in each stage may be performed continuously, batchwise or semi-continuously, and is preferably carried out continuously. The polymerization may be performed by a known method such as gas-phase polymerization or liquid-phase polymerization such as solution polymerization, slurry polymerization or bulk polymerization. Preferably, the polymerization in the second and later stages is performed continuously from the previous stage. In the case of a batchwise process, the multistage polymerization may be performed using a single polymerizer.

The polymerization medium may be an inert hydrocarbon or liquid propylene. Regarding the polymerization conditions in each stage, the polymerization temperature may be appropriately selected from the range of about -50 to +200°C, and preferably about 20 to 100°C, and the polymerization pressure may be appropriately selected from the range of normal pressure to 9.8 MPa (gauze pressure), and preferably about 0.2 to 4.9 MPa (gauze pressure).

A propylene homopolymer or a propylene·comonomer copolymer for use as the propylene polymer (A) in the invention may be produced in accordance with the aforementioned method for producing a propylene·ethylene block copolymer. Specifically, a propylene homopolymer may be produced by polymerizing propylene alone in a single stage or in two or more stages, and a propylene·comonomer copolymer may be produced by polymerizing propylene with a comonomer in a single stage or in two or more stages.

### 〈Ethylene·α-olefin·diene copolymers (B-1)〉

The ethylene·α-olefin·diene copolymer as the component (B-1) used in the invention has a melt flow rate of less than 0.4 g/10 min, and preferably 0.05 to 0.35 g/10 min.

The weight average molecular weight (Mw) of the component (B-1) measured by GPC is preferably 2.0 × 10⁵ to 5.0 × 10⁵, and more preferably 2.3 × 10⁵ to 3.0 × 10⁵. If the weight average molecular weight of the component (B-1) is below 2.0 × 10⁵, the obtainable shaped articles may exhibit high surface gloss. Any weight average molecular weight exceeding 5.0 × 10⁵ may result in a decrease in the impact resistance of shaped articles.

Examples of the α-olefins for constituting the ethylene·α-olefin·diene copolymer used as the component (B-1) include those α-olefins having 3 to 10 carbon atoms, with specific examples including propylene, 1-butene, 1-hexene and 1-octene.

Examples of the dienes for constituting the ethylene·α-olefin·diene copolymer used as the component (B-1) include cyclic unconjugated dienes such as 5-ethylidene-2-norbornene, 5-propylidene-2-norbornene, dicyclopentadiene, 5-vinyl-2-norbornene, 5-methylene-2-norbornene, 5-isopropylidene-2-norbornene and norbornadiene; and chain unconjugated dienes such as 1,4-hexadiene, 4-methyl-1,4-hexadiene, 5-methyl-1,4-hexadiene, 5-methyl-1,5-heptadiene, 6-methyl-1,5-heptadiene, 6-methyl-1,7-octadiene and 7-methyl-1,6-octadiene. Of these, 1,4-hexadiene, dicyclopentadiene and 5-ethylidene-2-norbornene are preferred.

The 23°C n-decane soluble fraction of the component (B-1) preferably has an intrinsic viscosity [η] of 2.0 to 2.4 dl/g.

### 〈Ethylene·α-olefin copolymers (B-2)〉

The ethylene·α-olefin copolymer as the component (B-2) used in the invention has a melt flow rate of 0.5 g/10 min to less than 10 g/10 min, and preferably 1.5 to 8 g/10 min.

Examples of the ethylene·α-olefin copolymers used as the components (B-2) include copolymers of ethylene with α-olefins having 3 to 10 carbon atoms. Preferred examples of the α-olefins include propylene, 1-butene, 1-hexene and 1-octene.

The weight average molecular weight (Mw) of the component (B-2) measured by GPC is 0.5 × 10⁵ to 2.0 × 10⁵, and preferably 1.0 × 10⁵ to 1.8 × 10⁵. This weight average molecular weight advantageously ensures that the obtainable composition exhibits well balanced mechanical properties.

Further, the 23°C n-decane soluble fraction of the component (B-2) preferably has an intrinsic viscosity [η] of 1.0 to 2.0 dl/g.

### 〈Inorganic fillers (C)〉

The inorganic filler (C) used in the invention is not particularly limited and may be any of known inorganic fillers. Examples include talc, mica, calcium carbonate, barium sulfate, glass fibers, gypsum, magnesium carbonate, magnesium oxide, titanium oxide, iron oxide, and metal powders or metal fibers such as zinc, copper, iron and aluminum. The fillers may be used singly, or two or more may be used as a mixture. In particular, preferred fillers include talc, mica, calcium carbonate and glass fibers, and talc is more preferable. Talc suitably has an average particle diameter of 1 to 15 µm, and preferably 1 to 6 µm.

### 〈Resin compositions (G)〉

The resin composition (G) used in the invention includes the component (A), the component (B-1), the component (B-2) and the component (C) described above. The proportions of the components relative to the total amount of the components (A), (B-1), (B-2) and (C) taken as 100 wt% are: 50 to 75 wt%, and preferably 50 to 69 wt% for (A), 5 to 15 wt% for (B-1), 5 to 15 wt% for (B-2), and 15 to 30 wt% for (C).

Here, the component (B) that is the total of the component (B-1) and the component (B-2) is present at 10 to 30 wt% in 100 wt% of the resin composition (G).

In the resin composition (G), it is desirable that the proportion of the component (B-1) in the total amount (100 wt%) of the component (B-1) and the component (B-2) be usually in the range of 25 to 75 wt%.

### 〈Modified polypropylenes (D)〉

The propylene resin composition of the invention includes a modified polypropylene (D) in an amount of 0.1 to 5.0 parts by weight, preferably 0.1 to 2.0 parts by weight, and more preferably 0.1 to 1.5 parts by weight with respect to 100 parts by weight of the aforementioned resin composition (G). In the propylene resin composition of the invention, the modified polypropylene (D) serves as a scratch resistance improver.

The modified polypropylene (D) is preferably a fatty acid anhydride-modified polypropylene and, in particular, more preferably maleic anhydride-modified polypropylene. When maleic anhydride-modified polypropylene is used as the modified polypropylene (D), the content of maleic acid modifier groups (M value) is usually 0.5 wt% to 5.0 wt%, and preferably 0.8 wt% to 2.5 wt% relative to the maleic anhydride-modified polypropylene as 100 wt%. If the content is below this range, no effects may be obtained in the improvement of scratch resistance. If the content is above this range, mechanical properties, in particular, impact strength may be decreased.

Specific examples of the maleic anhydride-modified polypropylenes include commercial products such as ADOMER from Mitsui Chemicals, Inc., UMEX from Sanyo Chemical Industries, Ltd., MZ series from DuPont, and Exxelor from Exxon.

### 〈Surface modifiers (E)〉

The propylene resin composition of the invention includes a surface modifier (E) which is one or more selected from the group consisting of fatty acid amides and monoglycerides in an amount of 0.1 to 1.5 parts by weight, preferably 0.2 to 1.3 parts by weight, and more preferably 0.3 to 1.0 part by weight with respect to 100 parts by weight of the aforementioned resin composition (G).

As the surface modifiers (E), fatty acid amides are preferable. Specific examples of the fatty acid amides include oleamide, stearamide, erucamide, behenamide, palmitamide, myristamide, lauramide, caprylamide, caproamide, n-oleylpalmitamide, n-oleylerucamide, and dimers of these amides. In particular, oleamide, stearamide, erucamide and erucamide dimer are preferable, and erucamide is more preferable. The modifiers may be used singly, or two or more may be used in combination.

### 〈Pigments (F)〉

The propylene resin composition of the invention includes a pigment (F) being a mixture including a carbon black (F-1) and an inorganic or organic pigment (F-2) in an amount of 1.0 to 6.0 parts by weight, preferably 1.4 to 4.0 parts by weight, and more preferably 1.5 to 3.0 parts by weight with respect to 100 parts by weight of the aforementioned resin composition (G) .

### [Carbon blacks (F-1)]

The average primary particle diameter of the carbon black (F-1) is 10 nm to less than 45 nm, preferably 15 nm to less than 40 nm, and more preferably 20 nm to less than 30 nm.

The surface area of the carbon black (F-1) is 40 m²/g to 550 m²/g, preferably 50 m²/g to 300 m²/g, and more preferably 80 m²/g to 250 m²/g.

If the carbon black (F-1) has an average primary particle diameter of less than 10 nm and a surface area exceeding 550 m²/g, the aggregation of the pigment is promoted and the pigment fails to exhibit sufficient coloring power and concealing properties, causing a decrease in scratch resistance. Further, the obtainable shaped articles may suffer appearance defects (acnes on the surface) or a decrease in impact resistance. If the average primary particle diameter is 45 nm or more and the surface area is below 40 m²/g, the pigment does not exhibit coloring power and concealing properties, causing a decrease in scratch resistance.

The average primary particle diameter of the carbon black (F-1) is determined by analyzing the particles with an electron microscope and calculating the average diameter as the particle diameter. The surface area is measured by a method in accordance with JIS K 6127-2 Nitrogen Adsorption Method.

### [Inorganic or organic pigments (F-2)]

The inorganic or organic pigment (F-2) may be any of known pigments without limitation. Specifically, examples of the inorganic pigments (except carbon blacks) include titanium oxide pigments, composite oxide (for example, Ti-Cr-Sb composite oxide) pigments, ultramarine blue pigments, iron oxide pigments and chromium oxide pigments, and examples of the organic pigments include soluble azo pigments, insoluble azo pigments, condensed azo pigments, phthalocyanine (for example, copper phthalocyanine) pigments and condensed polycyclic pigments.

Of these, titanium oxide pigments, Ti-Cr-Sb composite oxide pigments and copper phthalocyanine pigments are preferable in light of the balance with the color tone of the carbon black (F-1) and from the point of view of scratch resistance (prevention of whitening).

The average primary particle diameter of the inorganic or organic pigment (F-2) is 0. 05 µm to less than 5 µm, preferably 0.1 µm to less than 3 µm, and more preferably 0.1 µm to less than 1 µm. If the inorganic or organic pigment (F-2) has an average primary particle diameter of less than 0.05 µm, the aggregation of the pigment is promoted and the pigment fails to exhibit sufficient coloring power and concealing properties, causing a decrease in scratch resistance. Further, the obtainable shaped articles may suffer appearance defects (acnes on the surface) or a decrease in impact resistance. If the average primary particle diameter is 5 µm or more, the pigment does not exhibit sufficient coloring power and concealing properties, causing a decrease in scratch resistance.

The average primary particle diameter of the inorganic or organic pigment (F-2) is measured by analyzing the particles with a laser diffraction/scattering particle diameter/grain size distribution analyzer and averaging the measured values to give an average diameter as the particle diameter.

### [Contents of (F-1) and (F-2)]

The amount of the carbon black (F-1) is 0.5 parts by weight to 3.0 parts by weight, preferably 0.8 parts by weight to 2.5 parts by weight, and more preferably 0.8 parts by weight to 2.0 parts by weight with respect to 100 parts by weight of the aforementioned resin composition (G).

If the amount of the carbon black (F-1) exceeds 3.0 parts by weight, the aggregation of the pigment is promoted and the pigment fails to exhibit sufficient coloring power and concealing properties, causing a decrease in scratch resistance. Further, the obtainable shaped articles may suffer appearance defects (acnes on the surface) or a decrease in impact resistance. If the amount is less than 0.5 parts by weight, the pigment does not exhibit sufficient coloring power and concealing properties, causing a decrease in scratch resistance.

The amount of the inorganic or organic pigment (F-2) is 0.5 parts by weight to 3.0 parts by weight, preferably 0.5 parts by weight to 2.5 parts by weight, and more preferably 0.5 parts by weight to 2.0 parts by weight with respect to 100 parts by weight of the aforementioned resin composition (G). If the amount of the inorganic or organic pigment (F-2) exceeds 3.0 parts by weight, the aggregation of the pigment is promoted and the pigment fails to exhibit sufficient coloring power and concealing properties, causing a decrease in scratch resistance. Further, the obtainable shaped articles may suffer appearance defects (acnes on the surface) or a decrease in impact resistance. If the amount is less than 0.5 parts by weight, the pigment does not exhibit sufficient coloring power and concealing properties, causing a decrease in scratch resistance.

The ratio of the amount of the carbon black (F-1) to the amount of the inorganic or organic pigment (F-2) ((F-1)/(F-2)) is 1.0 to 3.0, preferably 1.0 to 2.5, and more preferably 1.0 to 2.0. If the carbon black (F-1) is added in such excess over the inorganic or organic pigment (F-2) that the ratio ((F-1) / (F-2)) exceeds 3.0, the very dark color tone of shaped articles makes whitening conspicuous and consequently the scratch resistance is decreased.

### 〈Other additives〉

The propylene resin composition of the invention may contain other additives such as heat stabilizers, antistatic agents, weather stabilizers, light stabilizers, antiaging agents, antioxidants, fatty acid metal salts, softeners, dispersants, fillers, colorants, lubricants and pigments as required while still achieving the object of the invention. The order of the mixing of the components including additives is not limited. The components may be mixed at the same time or in multistages in such a manner that some of the components are mixed first and thereafter other components are mixed.

### 〈Propylene resin compositions〉

The propylene resin composition of the invention may be produced by blending the resin composition (G) including the aforementioned components (A), (B-1), (B-2) and (C), with the components (D), (E) and (F) and optionally other additives. These components may be added in any order.

The propylene resin composition of the invention may be obtained by mixing or melt kneading the aforementioned components (A), (B-1), (B-2), (C), (D), (E) and (F) and optionally other additives with use of a mixing apparatus such as a Banbury mixer, a single-screw extruder, a twin-screw extruder or a high-speed twin-screw extruder.

The propylene resin composition of the invention is particularly suitably used for injection molding. Injection molded articles of the propylene resin composition of the invention are excellent in mechanical properties, have excellent appearance with less noticeable defects such as flow marks and weld marks, and exhibit low gloss and excellent scratch resistance.

The propylene resin composition of the invention discussed above may be suitably used in various fields such as automobile interior and exterior parts and home appliance parts.

### EXAMPLES

The present invention will be described in further detail based on Examples hereinbelow without limiting the scope of the invention to such Examples.

In the invention, properties were measured and evaluated by the following methods.

### [N-decane soluble fraction]

The content of 25°C n-decane soluble fraction in a propylene-ethylene block copolymer used as a propylene copolymer (A) was determined as follows.

First, a sample weighing 5 ± 0.05 g was placed into a 1,000 mL recovery flask, and 1 ± 0. 05 g of BHT (dibutylhydroxytoluene, a phenolic antioxidant) was added. Thereafter, a stir bar and 700 ± 10 mL of n-decane were added. A condenser was fitted to the recovery flask. While rotating the stir bar, the flask was heated in an oil bath at 135 ± 5°C for 120 ± 30 minutes to dissolve the sample in n-decane. Next, the whole in the flask was poured into a 1,000 mL beaker. While performing stirring with the stirrer, the solution in the beaker was allowed to cool to room temperature (25°C) (for at least 8 hours), and the precipitate was filtered through a metal mesh. The filtrate was further filtered through a filter paper and was poured into 2,000 ± 100 mL of methanol in a 3,000 mL beaker. The liquid was allowed to stand for at least 2 hours at room temperature (25°C) while performing stirring with the stirrer. Next, the resultant precipitate was filtered out with a metal mesh, air dried for at least 5 hours and dried in a vacuum drier at 100 ± 5°C for 240 to 270 minutes, thereby recovering a 25°C n-decane soluble fraction.

The content (x) of the 25°C n-decane soluble fraction is expressed as x (mass%) = 100 x C/A wherein A is the sample weight in g, and C is the weight in g of the n-decane soluble fraction recovered.

### [Content of maleic acid modifier groups (M value)]

A 2 g portion of an acid-modified resin (maleic anhydride-modified polypropylene) used as a modified polypropylene (D) was sampled and was completely dissolved in 500 mL of boiling p-xylene while performing heating. After being cooled, the solution was added to 1200 mL of acetone. The precipitate was filtered out and was dried to afford a purified polymer. The purified polymer was hot pressed into a 20 µm thick film. The film was analyzed by infrared absorption spectroscopy, and the content of the acid used for modification was determined based on the absorption assigned to the modifier acid. The absorption assigned to the modifier acid is observed at near 1780 cm⁻¹ in the case of maleic anhydride, and at 1730 cm⁻¹ in the case of a methacrylate ester.

### [Measurement of melt flow rate]

The measurement was performed in accordance with ISO 1133 (measurement temperature: 230°C, load: 2.16 kg).

### [Room-temperature Charpy impact strength (kJ/m²)]

The measurement was carried out with respect to a notched sample with a hammer energy of 4 J in accordance with ISO 179.

### [Measurement of tensile elastic modulus]

The tensile elastic modulus was measured at a stress rate of 1 mm/min in accordance with ISO 527.

### [Measurement of flow marks]

A 350 mm × 100 mm × 2 mmt thick article was molded at a molding temperature of 210°C, a mold temperature of 40°C, an injection rate of 25 mm/s, a change-over position of 9 mm, a hold pressure of 30 MPa and a holding time of 10 seconds. The distance from the gate to a visible flow mark was measured.

### [Specular gloss]

A plate 130 mm in length, 120 mm in width and 3 mmt in thickness molded at a molding temperature of 210°C and a mold temperature of 40°C was mirror finished. The finished surface of the plate was illuminated at a light source angle of 60° and the specular gloss was measured with a gloss meter (NDH-300 manufactured by NIPPON DENSHOKU INDUSTRIES CO., LTD.).

### [Scratch resistance]

A plate 130 mm in length, 120 mm in width and 2 mmt in thickness molded at a molding temperature of 210°C and a mold temperature of 40°C was grained on its surface (Grain C). The molded article was subjected to the following evaluations.
(i) The maximum load (N) prior to the occurrence of visible whitening in Ford 5-Finger Test was measured.
(ii) The test piece was subjected to a cross-cut test under a load of 100 g or 200 g, and the difference in color before and after the test was measured with a spectrocolorimeter.

Components used in Examples and Comparative Examples and properties thereof are described below.

### (A) Propylene polymers

### (A-1) Propylene block copolymer

### (1) Preparation of solid titanium catalyst component

An oscillation mill was provided which had four 4 L volume crusher pots containing 9 kg of steel balls 12 mm in diameter. In a nitrogen atmosphere, 300 g of magnesium chloride, 115 mL of diisobutyl phthalate and 60 mL of titanium tetrachloride were added to each of the pots, and were crushed for 40 hours.

75 g of the crushed mixture was placed into a 5 L flask, to which 1.5 L of toluene was added. The resultant mixture was stirred at 114°C for 30 minutes and was allowed to stand. The supernatant liquid was removed. Next, the solid was washed with 1.5 L of n-heptane at 20°C three times and was dispersed in 1.5 L of n-heptane to give a transition metal catalyst component slurry. The transition metal catalyst component obtained contained 2 wt% of titanium and 18 wt% of diisobutyl phthalate.

### (2) Production of prepolymerized catalyst

To a 200 L volume autoclave equipped with a stirrer were inserted 115 g of the transition metal catalyst component, 65. 6 mL of triethylaluminum, 22.1 mL of 2-isobutyl-2-isopropyl-1,3-dimethoxypropane and 115 L of heptane. While maintaining the inside temperature at 5°C, 1150 g of propylene was inserted and the reaction was performed for 60 minutes while performing stirring. After the completion of the polymerization, 15.8 mL of titanium tetrachloride was added. A prepolymerized catalyst (catalyst slurry) was thus obtained.

### (3) Main polymerization

To a 1000 L volume polymerization vessel equipped with a stirrer were continuously supplied propylene at 159 kg/h, the catalyst slurry at 1.4 g/h in terms of the transition metal catalyst component, triethylaluminum at 21.9 mL/h, and dicyclopentyldimethoxysilane at 2.8 mL/h. Hydrogen was supplied so that the hydrogen concentration in the gas phase would be 13.4 mol%. The polymerization was performed at a polymerization temperature of 68°C and a pressure of 3.6 MPa/G.

The slurry obtained was fed to a 500 L volume polymerization vessel equipped with a stirrer, and polymerization was further performed. To the polymerizer, propylene was supplied at 37 kg/h, and hydrogen was supplied so that the hydrogen concentration in the gas phase would be 11.5 mol%. During the polymerization, the polymerization temperature was 68°C, and the pressure was 3.4 MPa/G.

The slurry obtained was fed to a 500 L volume polymerization vessel equipped with a stirrer, and polymerization was further performed. To the polymerizer, propylene was supplied at 19 kg/h, and hydrogen was supplied so that the hydrogen concentration in the gas phase would be 8.0 mol%. During the polymerization, the polymerization temperature was 68°C, and the pressure was 3.4 MPa/G.

The slurry obtained was fed to a 500 L volume polymerization vessel equipped with a stirrer, and polymerization was further performed. To the polymerizer, propylene was supplied at 15 kg/h, and hydrogen was supplied so that the hydrogen concentration in the gas phase would be 0.27 mol%. Ethylene was added so that the polymerization temperature would be 65°C and the pressure would be 3.2 MPa/G. Diethylene glycol ethyl acetate was added in a ratio of 26 times the moles of the Ti component in the transition metal catalyst component.

The slurry obtained was deactivated and evaporated, and gas-solid separation was performed. The propylene block copolymer obtained was vacuum dried at 80°C.

Properties of the propylene·ethylene block copolymer (A-1) obtained above are listed below.

MFR = 53 g/10 min
Weight of 23°C n-decane soluble fraction = 12 wt%
Ethylene content in 23°C n-decane soluble fraction = 37 mol%
[η] of 23°C n-decane soluble fraction = 6 dl/g

### (A-2) Propylene block copolymer

### (1) Preparation of solid titanium catalyst component

A uniform solution was prepared by heating 952 g of anhydrous magnesium chloride, 4420 mL of decane and 3906 g of 2-ethylhexyl alcohol at 130°C for 2 hours. To the solution, 213 g of phthalic anhydride was added. The resultant mixture was further stirred at 130°C for 1 hour, and thereby the phthalic anhydride was dissolved.

The uniform solution obtained above was cooled to 23°C, and 750 mL of the uniform solution was added dropwise to 2000 mL of titanium tetrachloride held at -20°C over a period of 1 hour. After the dropwise addition, the temperature of the mixture liquid was increased to 110°C in 4 hours. When the temperature reached 110°C, 52.2 g of diisobutyl phthalate (DIBP) was added. The temperature was maintained constant for 2 hours while performing stirring. Next, the solid was collected by hot filtration. The solid was resuspended in 2750 mL of titanium tetrachloride, and the suspension was heated at 110°C for 2 hours.

After the completion of the heating, the solid was collected by hot filtration and was washed with decane and hexane at 110°C until no titanium compounds were detected in the washings.

The solid titanium catalyst component prepared above was stored as a hexane slurry. A portion of the slurry was dried and analyzed to determine the composition of the catalyst. The solid titanium catalyst component was found to contain 2 wt% titanium, 57 wt% chlorine, 21 wt% magnesium and 20 wt% DIBP.

### (2) Production of prepolymerized catalyst

To a 20 L volume autoclave equipped with a stirrer were inserted 87.5 g of the solid catalyst component, 99.8 mL of triethylaluminum, 28.4 mL of diethylaminotriethoxysilane, and 12.5 L of heptane. While maintaining the inside temperature at 15 to 20°C, 875 g of propylene was inserted and the reaction was performed for 100 minutes while performing stirring. After the completion of the polymerization, the solid component was allowed to settle, and the supernatant liquid was removed. The solid component was washed with heptane two times. The resultant prepolymerized catalyst was resuspended in purified heptane. The concentration of the solid catalyst component was adjusted to 0.7 g/L by the addition of heptane.

### (3) Main polymerization

To a 1000 L volume polymerization vessel equipped with a stirrer were continuously supplied propylene at 131 kg/h, the catalyst slurry at 0.67 g/h in terms of the transition metal catalyst component, triethylaluminum at 19.7 mL/h, and diethylaminotriethoxysilane at 4.4 mL/h. Hydrogen was supplied so that the hydrogen concentration in the gas phase would be 5.9 mol%. The polymerization was performed at a polymerization temperature of 75°C and a pressure of 3.5 MPa/G.

The slurry obtained was fed to a 500 L volume polymerization vessel equipped with a stirrer, and polymerization was further performed. To the polymerizer, propylene was supplied at 30 kg/h, and hydrogen was supplied so that the hydrogen concentration in the gas phase would be 4.6 mol%. During the polymerization, the polymerization temperature was 74.5°C, and the pressure was 3.5 MPa/G.

The slurry obtained was fed to a 500 L volume polymerization vessel equipped with a stirrer, and polymerization was further performed. To the polymerizer, propylene was supplied at 20 kg/h, and hydrogen was supplied so that the hydrogen concentration in the gas phase would be 4.0 mol%. During the polymerization, the polymerization temperature was 73°C, and the pressure was 3.4 MPa/G.

The slurry obtained was fed to a 500 L volume polymerization vessel equipped with a stirrer, and polymerization was further performed. To the polymerizer, propylene was supplied at 15 kg/h, and hydrogen was supplied so that the hydrogen concentration in the gas phase would be 0.17 mol%. Ethylene was added so that the polymerization temperature would be 67°C and the pressure would be 3.3 MPa/G. Diethylene glycol ethyl acetate was added in a ratio of 46 times the moles of the Ti component in the transition metal catalyst component.

The slurry obtained was deactivated and evaporated, and gas-solid separation was performed. The propylene block copolymer obtained was vacuum dried at 80°C.

Properties of the propylene·ethylene block copolymer (A-2) obtained above are listed below.

MFR = 90 g/10 min
Weight of 23°C n-decane soluble fraction = 9 wt%
Ethylene content in 23°C n-decane soluble fraction = 37 mol%
[η] of 23°C n-decane soluble fraction = 7 dl/g

### (B-1) Ethylene·α-olefin·diene copolymers

(B-1-1) Ethylene-propylene-diene random copolymer (product name: 3092PM, manufactured by Mitsui Chemicals, Inc.)
   MFR = 0.2 g/10 min
   [η] = 2.1 dl/g
(B-1-2) Ethylene-propylene-diene random copolymer (product name: IP4760P, manufactured by Dow Elastomers Japan)
   MFR = 0.2 g/10 min
   [η] = 2.1 dl/g

### (B-2) Ethylene·α-olefin copolymers

(B-2-1) Ethylene-octene random copolymer (product name: H1030S, manufactured by Mitsui Chemicals, Inc.)
   MFR = 7 g/10 min
   [η] = 1.2 dl/g
(B-2-2) Ethylene-octene random copolymer (product name: EG8100, manufactured by Dow Elastomers Japan)
   MFR = 2 g/10 min
   [η] = 1.5 dl/g
(B-2-3) Ethylene-octene random copolymer (product name: EG8200, manufactured by Dow Elastomers Japan)
   MFR = 10.6 g/10 min
   [η] = 1.2 dl/g

### (C) Inorganic filler

### (C-1) Talc (product name: JM-209, manufactured by ASADA MILLING CO., LTD.)

Average particle diameter 4 µm

### (D) Modified polypropylene

### (D-1) Maleic anhydride-modified polypropylene (product name: QX-100, manufactured by Mitsui Chemicals, Inc.): M value = 3.0 wt%

### (E) Surface modifier

### (E-1) Erucamide (product name: Neutron S, manufactured by Nippon Fine Chemical Co., Ltd.)

### (F) Pigments

(F-1-1) Carbon black (product name: BLACK PEARLS 4840, manufactured by CABOT CORPORATION), average primary particle diameter 20 nm, surface area 204 m²/g
(F-1-2) Carbon black (product name: BLACK PEARLS 430, manufactured by CABOT CORPORATION), average primary particle diameter 27 nm, surface area 80 m²/g
(F-2-1) Titanium oxide (product name: Tipaque CR-63, manufactured by ISHIHARA SANGYO KAISHA, LTD.), average primary particle diameter 0.2 µm
(F-2-2) Ti-Cr-Sb composite oxide pigment (product name: Sicotan Yellow K 2001, manufactured by BASF), average primary particle diameter 0.7 µm
(F-2-3) Copper phthalocyanine pigment (product name: GB-09, manufactured by Dainichiseika Color & Chemicals Mfg. Co., Ltd.), average primary particle diameter 0.2 µm

### [Examples 1 to 8 and Comparative Examples 1 to 9]

With a high-speed mixer, a dry blend was prepared by blending the components described in Table 1 or 2 in the amounts described in the table, and also the following components:
an antioxidant (product name: IRGANOX 1010, manufactured by BASF): 0.1 part by weight,
an antioxidant (product name: IRGAFOS 168, manufactured by BASF: 0.1 part by weight,
a light stabilizer (product name: LA-52, manufactured by ADEKA CORPORATION): 0.2 parts by weight, and
a lubricant (product name: calcium stearate, manufactured by NOF CORPORATION): 0.1 part by weight. The blend was kneaded with a twin-screw extruder (product name: TEX30α, manufactured by The Japan Steel Works, Ltd.) at a cylinder temperature of 180°C, a screw rotational speed of 1100 rpm and an output of 110 kg/h, thus producing resin composition pellets.

The pellets obtained were injection molded to give samples for the aforementioned evaluation items and were evaluated.

The results are described in Tables 1 and 2.

### [Table 1]

**Table 1**

| | | | Ex. 1 | Ex. 2 | Ex. 3 | Ex. 4 | Ex. 5 | Ex. 6 | Ex. 7 | Ex. 8 |
|---|---|---|---|---|---|---|---|---|---|---|
| Amounts in propylene resin compositions (parts by weight) | Components A | A-1 | 61 | 61 | 61 | 61 | 61 | 61 | 61 | 61 |
| | | A-2 | | | | | | | | |
| | Components B-1 | B-1-1 | 9 | 9 | | 9 | 9 | | | |
| | | B-1-2 | | | 8 | | | 8 | 8 | 8 |
| | Components B-2 | B-2-1 | 10 | 10 | | 10 | 10 | | | |
| | | B-2-2 | | | 11 | | | 11 | 11 | 11 |
| | | B-2-3 | | | | | | | | |
| | Component C | C-1 | 20 | 20 | 20 | 20 | 20 | 20 | 20 | 20 |
| | Component D | D-1 | 0.30 | 0.30 | 0.30 | 0.30 | 0.30 | 0.30 | 0.30 | 0.30 |
| | Component E | E-1 | 0.30 | 0.30 | 0.30 | 0.30 | 0.30 | 0.30 | 0.30 | 0.30 |
| | Components F-1 | F-1-1 | | | 0.90 | | | 1.50 | | |
| | | F-1-2 | 1.00 | 1.40 | | 0.90 | 1.00 | | 1. 00 | 0.90 |
| | Components F-2 | F-2-1 | 0.50 | 0.70 | 0.20 | 0.10 | 0.50 | 0.50 | 0.50 | 0.20 |
| | | F-2-2 | 0.35 | 0.50 | | | 0.30 | 0.35 | 0.35 | |
| | | F-2-3 | | | 0.50 | 0.50 | | | | 0.50 |
| Mechanical characteristics | MFR | g/10 min | 15 | 15 | 14 | 16 | 13 | 14 | 15 | 16 |
| | Charpy impact strength | kJ/m² (23°C) | 17.3 | 18.2 | 16.1 | 29.6 | 14.4 | 19.0 | 20.1 | 18.0 |
| | Tensile elastic modulus | MPa | 1985 | 1985 | 1918 | 1913 | 2118 | 1851 | 1889 | 1855 |
| | Flow marks | mm | 130 | 131 | 138 | 135 | 138 | 130 | 132 | 132 |
| | Gloss (specular) | % | 19 | 18 | 20 | 19 | 20 | 21 | 21 | 21 |
| Scratch resistance | Whitening onset load | N | 13 | 15 | 15 | 13 | 15 | 13 | 13 | 13 |
| | Color difference under 100 g load | DE*ab | 1.6 | 1.3 | 1.1 | 1.1 | 1.8 | 1.2 | 1.4 | 1.8 |
| | Color difference under 200 g load | DE*ab | 2.8 | 2.4 | 2.2 | 2.2 | 2.9 | 2.2 | 2.5 | 2.6 |

### [Table 2]

**Table 2**

| | | | Comp. Ex. 1 | Comp. Ex. 2 | Comp. Ex. 3 | Comp. Ex. 4 | Comp. Ex. 5 |
|---|---|---|---|---|---|---|---|
| Amounts in propylene resin compositions (parts by weight) | Components A | A-1 | 61 | 61 | | | |
| | | A-2 | | | 61 | 61 | 61 |
| | Components B-1 | B-1-1 | 9 | | | | |
| | | B-1-2 | | 8 | | | |
| | Components B-2 | B-2-1 | 10 | | | | |
| | | B-2-2 | | 11 | | | |
| | | B-2-3 | | | 17 | 17 | 17 |
| | Component C | C-1 | 20 | 20 | 22 | 22 | 22 |
| | Component D | D-1 | 0.30 | 0.30 | 1.00 | 1.00 | 0.30 |
| | Component E | E-1 | 0.30 | 0.30 | 0.30 | 0.30 | 0.30 |
| | Components F-1 | F-1-1 | 0.40 | 0.45 | 1.50 | | |
| | | F-1-2 | | | | 1.00 | 0.90 |
| | Components F-2 | F-2-1 | 0.10 | 0.05 | 0.50 | 0.50 | 0.20 |
| | | F-2-2 | | 0.05 | 0.35 | 0.35 | |
| | | F-2-3 | 0.35 | | | | 0.50 |
| Mechanical characteristics | MFR | g/10 min | 18 | 17 | 22 | 28 | 31 |
| | Charpy impact strength | kJ/m² (23°C) | 16.1 | 16.8 | 9.0 | 9.0 | 8.3 |
| | Tensile elastic modulus | MPa | 1990 | 2040 | 2047 | 2095 | 2031 |
| | Flow marks | mm | 130 | 135 | 133 | 132 | 131 |
| | Gloss (specular) | % | 20 | 20 | 50 | 46 | 45 |
| Scratch resistance | Whitening onset load | N | 7 | 7 | 15 | 15 | 15 |
| | Color difference under 100 g load | DE*ab | 4.3 | 2.8 | 0.8 | 0.7 | 0.9 |
| | Color difference under 200 g load | DE*ab | 6.5 | 4.2 | 1.6 | 1.6 | 1.7 |

From Examples 1 to 8 and Comparative Examples 1 and 2, it has been shown that the molded articles of the propylene resin compositions of the invention achieve an improvement in scratch resistance by virtue of the addition of the appropriate amount of the pigment component (F).

From Examples 6 to 8 and Comparative Examples 3 to 5, it has been shown that the specular gloss of the molded articles of the propylene resin compositions of the invention is optimized by the addition of the appropriate amount of the ethylene·α-olefin copolymer component (B-2).

### INDUSTRIAL APPLICABILITY

The propylene resin compositions of the invention may be suitably used as shaping materials in various fields such as automobile interior and exterior parts including instrument panels and console boxes, and home appliance parts.

## Claims

1. A propylene resin composition comprising:
100 parts by weight of a resin composition (G) including:
50 to 75 wt% of a propylene polymer (A) having a melt flow rate (ISO 1133, 230°C, 2.16 kg load) of 20 to 300 g/10 min,
5 to 15 wt% of an ethylene·α-olefin·diene copolymer (B-1) having a melt flow rate (ISO 1133, 230°C, 2.16 kg load) of less than 0.4 g/10 min,
5 to 15 wt% of an ethylene·α-olefin copolymer (B-2) having a melt flow rate (ISO 1133, 230°C, 2.16 kg load) of 0.5 g/10 min to less than 10 g/10 min, and
15 to 30 wt% of an inorganic filler (C) (wherein the total amount of the components (A), (B-1), (B-2) and (C) is 100 wt%);
0.1 to 5.0 parts by weight of a modified polypropylene (D);
0.1 to 1.0 part by weight of a surface modifier (E); and
1.0 to 6.0 parts by weight of a pigment (F), wherein the surface modifier (E) is one or more selected from the group consisting of fatty acid amides and monoglycerides, and wherein the pigment (F) is a mixture including a carbon black (F-1) and an inorganic or organic pigment (F-2).

2. The propylene resin composition according to claim 1, wherein the pigment (F) is a mixture including 0.5 parts by weight to 3.0 parts by weight of a carbon black (F-1) and 0.5 parts by weight to 3.0 parts by weight of an inorganic or organic pigment (F-2).

3. The propylene resin composition according to claim 2, wherein the ratio of the amount of the carbon black (F-1) to the amount of the inorganic or organic pigment (F-2) ((F-1)/(F-2)) is 1.0 to 3.0.

4. The propylene resin composition according to claim 2 or 3, wherein the carbon black (F-1) has an average primary particle diameter of 10 nm to less than 45 nm and a surface area of 40 m²/g to 550 m²/g.

5. The propylene resin composition according to any one of claims 1 to 4, wherein the propylene polymer (A) is a propylene·ethylene block copolymer.

6. The propylene resin composition according to claim 5, wherein the propylene·ethylene block copolymer has a content of 23°C n-decane soluble fraction of 5 to 15 wt%.

7. The propylene resin composition according to any one of claims 1 to 6, wherein the intrinsic viscosity [η] of a 23°C n-decane soluble fraction of the component (B-1) is 2.0 to 2.4 dl/g and the intrinsic viscosity [η] of a 23°C n-decane soluble fraction of the component (B-2) is 1.0 to 2.0 dl/g.

8. The propylene resin composition according to any one of claims 1 to 7, wherein the total amount of the component (B-1) and the component (B-2) is 10 to 30 wt% relative to 100 wt% of the resin composition (G).

9. The propylene resin composition according to any one of claims 1 to 8, wherein the proportion of the component (B-1) in the total amount of the component (B-1) and the component (B-2) is 25 to 75 wt%.

10. The propylene resin composition according to any one of claims 1 to 9, wherein the inorganic filler (C) is talc having an average particle diameter of 1 to 15 µm.

11. The propylene resin composition according to any one of claims 1 to 10, wherein the modified polypropylene (D) is a fatty acid anhydride-modified polypropylene.

12. The propylene resin composition according to any one of claims 1 to 11, wherein the surface modifier (E) is a fatty acid amide.

13. The propylene resin composition according to any one of claims 1 to 12, wherein the pigment (F-2) is one or more selected from the group consisting of titanium oxides, Ti-Cr-Sb composite oxide pigments and copper phthalocyanine pigments.

14. A shaped article comprising the propylene resin composition described in any one of claims 1 to 13.

15. An automobile interior or exterior part comprising the propylene resin composition described in any one of claims 1 to 13.

16. A home appliance comprising the propylene resin composition described in any one of claims 1 to 13.

## Patentansprüche

1. Propylenharzzusammensetzung, umfassend:
100 Gewichtsteile einer Harzzusammensetzung (G) mit:
50 bis 75 Gew.-% eines Propylenpolymers (A) mit einer Schmelzflussrate (ISO 1133, 230°C, 2,16 kg Last) von 20 bis 300 g/10 min,
5 bis 15 Gew.-% eines Ethylen-α-Olefin-Dien-Copolymers (B-1) mit einer Schmelzflussrate (ISO 1133, 230°C, 2,16 kg Last) von weniger als 0,4 g/10 min,
5 bis 15 Gew.-% eines Ethylen-α-Olefin-Copolymers (B-2) mit einer Schmelzflussrate (ISO 1133, 230°C, 2,16 kg Last) von 0,5 g/10 min bis weniger als 10 g/10 min, und
15 bis 30 Gew.-% eines anorganischen Füllstoffs (C) (wobei die Gesamtmenge der Komponenten (A), (B-1), (B-2) und (C) 100 Gew.-% beträgt);
0,1 bis 5,0 Gewichtsteile eines modifizierten Polypropylens (D);
0,1 bis 1,0 Gewichtsteile eines Oberflächenmodifizierungsmittels (E); und
1,0 bis 6,0 Gewichtsteile eines Pigments (F), wobei das Oberflächenmodifizierungsmittel (E) eines oder mehrere ist oder sind, ausgewählt aus der Gruppe bestehend aus Fettsäureamiden und Monoglyceriden, und wobei das Pigment (F) ein Gemisch ist, das Ruß (F-1) und ein anorganisches oder organisches Pigment (F-2) enthält.

2. Propylenharzzusammensetzung gemäß Anspruch 1, wobei das Pigment (F) ein Gemisch ist, das 0,5 Gewichtsteile bis 3,0 Gewichtsteile Ruß (F-1) und 0,5 Gewichtsteile bis 3,0 Gewichtsteile eines anorganischen oder organischen Pigments (F-2) enthält.

3. Propylenharzzusammensetzung gemäß Anspruch 2, wobei das Verhältnis der Menge des Rußes (F-1) zur Menge des anorganischen oder organischen Pigments (F-2) ((F-1)/(F-2)) 1,0 bis 3,0 beträgt.

4. Propylenharzzusammensetzung gemäß Anspruch 2 oder 3, wobei der Ruß (F-1) einen mittleren Primärteilchendurchmesser von 10 nm bis weniger als 45 nm und eine Oberfläche von 40 m²/g bis 550 m²/g aufweist.

5. Propylenharzzusammensetzung gemäß einem der Ansprüche 1 bis 4, wobei das Propylenpolymer (A) ein Propylen-Ethylen-Blockcopolymer ist.

6. Propylenharzzusammensetzung gemäß Anspruch 5, wobei das Propylen-Ethylen-Blockcopolymer einen Gehalt einer bei 23°C in n-Decan löslichen Fraktion von 5 bis 15 Gew.-% aufweist.

7. Propylenharzzusammensetzung gemäß einem der Ansprüche 1 bis 6, wobei die intrinsische Viskosität [η] einer bei 23°C in n-Decan löslichen Fraktion der Komponente (B-1) 2,0 bis 2,4 dl/g beträgt und die intrinsische Viskosität [η] einer bei 23°C in n-Decan löslichen Fraktion der Komponente (B-2) 1,0 bis 2,0 dl/g beträgt.

8. Propylenharzzusammensetzung gemäß einem der Ansprüche 1 bis 7, wobei die Gesamtmenge der Komponente (B-1) und der Komponente (B-2) 10 bis 30 Gew.-%, bezogen auf 100 Gew.-% der Harzzusammensetzung (G), beträgt.

9. Propylenharzzusammensetzung gemäß einem der Ansprüche 1 bis 8, wobei der Anteil der Komponente (B-1) in der Gesamtmenge der Komponente (B-1) und der Komponente (B-2) 25 bis 75 Gew.-% beträgt.

10. Propylenharzzusammensetzung gemäß einem der Ansprüche 1 bis 9, wobei der anorganische Füllstoff (C) Talk mit einem mittleren Teilchendurchmesser von 1 bis 15 µm ist.

11. Propylenharzzusammensetzung gemäß einem der Ansprüche 1 bis 10, wobei das modifizierte Polypropylen (D) ein Fettsäureanhydrid-modifiziertes Polypropylen ist.

12. Propylenharzzusammensetzung gemäß einem der Ansprüche 1 bis 11, wobei das Oberflächenmodifizierungsmittel (E) ein Fettsäureamid ist.

13. Propylenharzzusammensetzung gemäß einem der Ansprüche 1 bis 12, wobei das Pigment (F-2) eines oder mehrere ist oder sind, ausgewählt aus der Gruppe bestehend aus Titanoxiden, Ti-Cr-Sb-Mischoxidpigmenten und Kupfer-Phthalocyanin-Pigmenten.

14. Formgegenstand, umfassend die in einem der Ansprüche 1 bis 13 beschriebene Propylenharzzusammensetzung.

15. Innen- oder Aussenteil eines Kraftfahrzeugs, umfassend die in einem der Ansprüche 1 bis 13 beschriebene Propylenharzzusammensetzung.

16. Haushaltsgerät, umfassend die in einem der Ansprüche 1 bis 13 beschriebene Propylenharzzusammensetzung.

## Revendications

1. Composition de résine de propylène comprenant :
100 parties en poids d'une composition de résine (G) incluant :
50 à 75 % en poids d'un polymère de propylène (A) présentant une vitesse d'écoulement à l'état fondu (ISO 1133, 230 °C, 2,16 kg de charge) de 20 à 300 g/10 min, 5 à 15 % en poids d'un copolymère d'éthylène-α-oléfine-diène (B-1) présentant une vitesse d'écoulement à l'état fondu (ISO 1133, 230 °C, 2,16 kg de charge) inférieure à 0,4 g/10 min,
5 à 15 % en poids d'un copolymère d'éthylène-α-oléfine (B-2) présentant une vitesse d'écoulement à l'état fondu (ISO 1133, 230 °C, 2,16 kg de charge) de 0,5 g/10 min à moins de 10 g/10 min, et
15 à 30 % en poids d'une charge inorganique (C) (dans laquelle la quantité totale des composants (A), (B-1), (B-2) et (C) est de 100 % en poids) ;
0,1 à 5,0 parties en poids d'un polypropylène modifié (D) ;
0,1 à 1,0 partie en poids d'un modificateur de surface (E) ; et
1,0 à 6,0 parties en poids d'un pigment (F), dans laquelle le modificateur de surface (E) est un ou plusieurs choisi(s) dans le groupe constitué par des amides d'acide gras et de monoglycérides, et dans laquelle le pigment (F) est un mélange incluant un noir de carbone (F-1) et un pigment inorganique ou organique (F-2).

2. Composition de résine de propylène selon la revendication 1, dans laquelle le pigment (F) est un mélange incluant 0,5 partie en poids à 3,0 parties en poids d'un noir de carbone (F-1) et 0,5 partie en poids à 3 0 parties en poids d'un pigment inorganique ou organique (F-2).

3. Composition de résine de propylène selon la revendication 2, dans laquelle le rapport de la quantité de noir de carbone (F-1) à la quantité de pigment inorganique ou organique (F-2) ((F-1)/(F-2)) est de 1,0 à 3,0.

4. Composition de résine de propylène selon la revendication 2 ou 3, dans laquelle le noir de carbone (F-1) présente un diamètre de particules primaires moyen de 10 nm à moins de 45 nm et une surface spécifique de 40 m²/g à 550 m²/g.

5. Composition de résine de propylène selon l'une quelconque des revendications 1 à 4, dans laquelle le polymère de propylène (A) est un copolymère séquencé de propylène-éthylène.

6. Composition de résine de propylène selon la revendication 5, dans laquelle le copolymère séquencé de propylène-éthylène présente une teneur en fraction soluble dans le n-décane à 23 °C de 5 à 15 % en poids.

7. Composition de résine de propylène selon l'une quelconque des revendications 1 à 6, dans laquelle la viscosité intrinsèque [η] d'une fraction soluble dans le n-décane à 23 °C du composant (B-1) est de 2,0 à 2,4 dl/g et la viscosité intrinsèque [n] d'une fraction soluble dans le n-décane à 23 °C du composant (B-2) est de 1,0 à 2,0 dl/g.

8. Composition de résine de propylène selon l'une quelconque des revendications 1 à 7, dans laquelle la quantité totale du composant (B-1) et du composant (B-2) est de 10 à 30 % en poids par rapport à 100 % en poids de la composition de résine (G).

9. Composition de résine de propylène selon l'une quelconque des revendications 1 à 8, dans laquelle la proportion du composant (B-1) dans la quantité totale du composant (B-1) et du composant (B-2) est de 25 à 75 % en poids.

10. Composition de résine de propylène selon l'une quelconque des revendications 1 à 9, dans laquelle la charge inorganique (C) est du talc présentant un diamètre de particules moyen de 1 à 15 µm.

11. Composition de résine de propylène selon l'une quelconque des revendications 1 à 10, dans laquelle le polypropylène modifié (D) est un polypropylène modifié par un anhydride d'acide gras.

12. Composition de résine de propylène selon l'une quelconque des revendications 1 à 11, dans laquelle le modificateur de surface (E) est un amide d'acide gras.

13. Composition de résine de propylène selon l'une quelconque des revendications 1 à 12, dans laquelle le pigment (F) est un ou plusieurs choisi(s) dans le groupe constitué par des oxydes de titane, des pigments d'oxyde composite Ti-Cr-Sb et des pigments de phtalocyanine de cuivre.

14. Article façonné comprenant la composition de résine de propylène décrite dans l'une quelconque des revendications 1 à 13.

15. Partie intérieure ou extérieure d'automobile comprenant la composition de résine de propylène décrite dans l'une quelconque des revendications 1 à 13.

16. Appareil ménager comprenant la composition de résine de propylène décrite dans l'une quelconque des revendications 1 à 13.
